# EUROPEAN PATENT SPECIFICATION

(11) **EP 1 080 753 B1**
(45) Date of publication and mention of the grant of the patent: **07.05.2003**
(21) Application number: 00901930.8
(22) Date of filing: 27.01.2000
(51) Int. Cl.: A63F 13/00, A63F 13/06, A63F 13/08

(54) **GAME MACHINE**
SPIELGERÄT
MACHINE DE JEU

(30) Priority: 29.01.1999 JP 2175599
(43) Date of publication of application: 07.03.2001
(73) Proprietor: Namco Ltd., Tokyo 146-0095 (JP)
(72) Inventor: EGASHIRA, Norio, Ota-ku, Tokyo 146-0095 (JP)
(74) Representative: Kador & Partner
(86) International application number: JP0000412
(87) International publication number: WO00044456

(56) References cited:
- EP-A- 0 823 271
- EP-A- 0 844 580
- JP-A- 5 161 761
- JP-A- 7 112 073
- JP-A- 7 178 246
- JP-A- 7 227 449
- JP-A- 7 227 450
- JP-A- 11 004 963
- JP-A- 11 007 543

## Description

### TECHNICAL FIELD

The present invention relates to a game apparatus capable of operating movements of an object of operation in a screen by a game player and playing a game simulating ball game sports in the screen.

### BACKGROUND ART

Game machines for home or arcade game machines have recently become widespread, and sport games for simulating various ball games have gained wide acceptance. Among them, a soccer game has a high popularity, and various game machines and game software capable of enjoying the soccer game have been distributed on the market. Then, with improvement in performance of the game machines, high techniques as played in actual soccer can have been implemented on the game machines. For example, there are the game machines in which a game player can adjust the strength of a kick in shooting, and in some machines the game player can use a long pass or a short pass according to circumstances. Moreover, there are some game machines capable of implementing a high technique such as a through-pass on the game machines.

By the way, as the performance of the game machine has improved and various game content like actual soccer can have been enjoyed, the number of operation means such as lever or button for operating the game machine has also increased. For example, in addition to an eight-directional lever for operating directions of player's movement or kick of ball, a button for "strong kick", a button for "weak kick", a button for "long pass", a button for "short pass", a button for "through-pass", etc. are provided.

However, when the number of operation means increases in that way, considerable experience is required to fully use the operation means. Because of this, for example, for arcade game machines installed in an amusement arcade, the following problem has occurred. Beginners avoid a game machine in which a large number of buttons or levers are provided taking the appearance of the game machine only at a glance, with the result that they does not play the game actually even in case it is enjoyable if playing the game. On the contrary, if the number of operation means is decreased to result in poor game content, the game cannot win popularity for a long time. The trend toward such an increasing operation means is also indicated in game machines for home.

Also, in conventional game machines, even if game content becomes various, the game is operated using movements of hands or fingertips persistently and the movements are entirely different from movements in playing actual ball games actually. Because of this, a game player merely gains a feeling that players in a screen play the ball games such as soccer, and the game player could not enjoy the game with a subjective feeling that the game player himself plays the ball game actually.

### DISCLOSURE OF INVENTION

The present invention is achieved in view of such a technical background, and an object of the present invention is to provide a game apparatus capable of operating an object of operation by movements similar to actual ball games while performing various operations by the minimum operation means.
The above object is accomplished by a game apparatus according to claim 1. Preferred embodiments of the invention are defined in the remaining claims.

### BRIEF DESCRIPTION OF DRAWINGS

Fig. 1 is a perspective view showing the whole of a game apparatus of the first carrying out mode;
Fig.2 is a sectional view illustrating structure of a kick input part;
Fig.3 is an enlarged display screen showing a situation in the vicinity of an opposition goal;
Fig.4 is an illustration showing the fact that a player in the screen operated by a game player can kick a ball in free directions to make a pass or a shot;
Fig.5 is an illustration showing a situation immediately after the player in the screen operated by the game player kicks a ball toward a goal in the vicinity of the opposition goal;
Fig.6 is an illustration showing a situation immediately after the player in the screen operated by the game player intercepts a ball by making a sliding tackle against a player of an opposition team keeping the ball;
Fig.7 is an illustration showing a situation immediately after the player in the screen operated by the game player makes a loop shot like describing trajectory over the head of a goal keeper of an opposition team;
Fig.8 is a flowchart showing algorithm in which a control part recognizes the movement how a ball part of a kick input part is kicked;
Fig.9 is a flowchart showing algorithm in which a control part recognizes the movement how a ball part of a kick input part is kicked;
Fig.10 is a flowchart showing algorithm in which a control part recognizes the movement how a ball part of a kick input part is kicked;
Fig.11 is an illustration showing a display image of a second embodiment, displaying an image viewable from the position placing a viewpoint at the slight back of the player operated by the game player;
Fig.12 is an illustration showing a kick input part of a game apparatus of the second embodiment; and
Fig.13 is a flowchart showing algorithm for recognizing the movement how a ball part of a kick input part is kicked.

### BEST MODE FOR CARRYING OUT THE INVENTION

The best mode for carrying out the invention according to the present application will be described below with reference to the drawings below.

Embodiments of the present invention will be described with reference to the drawings below.

### [First mode for carrying out the invention]

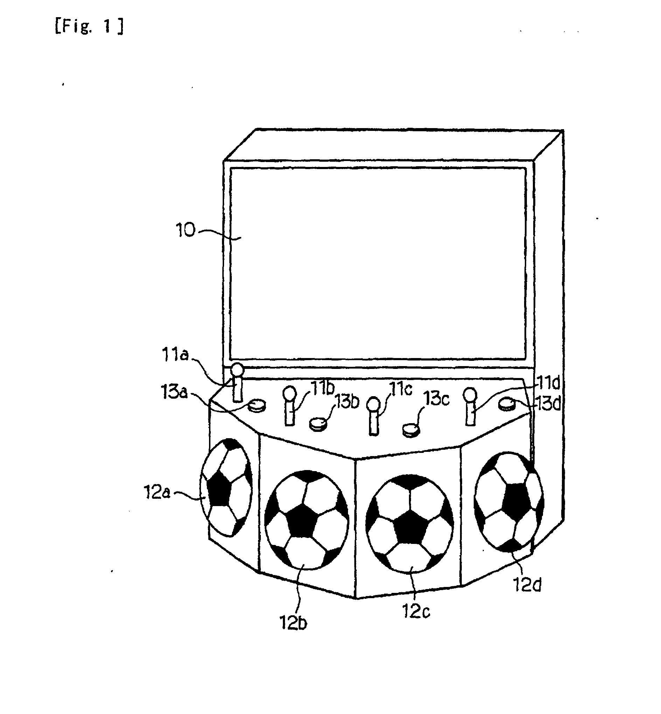

Fig.1 is a perspective view showing the whole of a game apparatus of the first carrying out mode of the present invention. The game apparatus of the present carrying out mode is specialized for a soccer game, and a maximum of four game players can enjoy the game at the same time. Also, a competition game of four persons versus four persons may be played with a maximum of eight persons by connecting the two game apparatus shown in Fig.1 through a communication line using the well known communication techniques.

In the game apparatus of the present embodiment, a display of a field during game continuation (playing) is an image viewed in the direction of looking down from the side of the field, but the magnification may be variously changed according to circumstances from the case of displaying a wide range capable of indicating both goals by pulling back a viewpoint to the case of enlarging and displaying only a vary small range of a player in the field. Also, zoom by changing in an angle of view or vertical and horizontal scrolling may be performed. This magnification or display screen is changed by a control part 35 comprising a CPU for controlling the whole game apparatus, etc. according to predetermined algorithm. Incidentally, when a player operated by a game player makes a shot to get a goal or the other certain conditions are satisfied, a replay screen is displayed, and in this case, images viewed from various directions are displayed.

In the game apparatus of Fig.1, a screen 10 capable of displaying content of a soccer game and the other necessary items by animated images or still images is provided at the position taking account of the height of the game player's eyes. In an operation part below the screen, four levers 11 (11a, 11b, 11c and lid), four kick input parts 12 (12a, 12b, 12c and 12d), and four buttons 13 (13a, 13b, 13c and 13d) are provided in consideration of the case of playing with four persons. Each game player operates one lever 11, one kick input part 12, and one button 13 for his or her own use. The lever 11 is the first operation means in the present invention and the kick input part 12 is the second operation means in the present invention.

The button 13 is used for changing a player operated by the game player during the playing time. In the arcade game apparatus with limited game time, vain time may elapse until the player reaches the position of a ball if the ball goes far apart from the player operated by the game player. In such a case, the player of the same side near the ball can be added to a new object of operation by operating the button 13, so that vain time can be reduced. Incidentally, even under the other circumstances, players used as an object of operation can be changed at game player's will.

When the game player pushes the button 13, a marker indicating capability of selection is displayed to one player of the same side on the screen for a certain period. When the game player operates the lever 11 or the kick input part 12 in this period, said player is set as an object of operation. On the other hand, if the game player wishes to select another player by pushing the button 13 again without operating the lever 11 or the kick input part 12, the marker is moved to another player. Then, if operating the lever 11 or the kick input part 12 at the stage that the marker is displayed for the desired player, said player is set as an object of operation. As a display form of the marker, methods of using an arrow pointing to the player or surrounding the player by a frame with a particular color can be performed.

Moreover, changing players as an object of operation can be automatically performed by the game apparatus. For example, the mode in which the game apparatus itself automatically changing the object of operation into a goal keeper when the same team as game player is attacked from an opposition team and a player of the opposition team is just making a shot can be selected. This enables the game player himself to directly enjoy the most exciting aspect during the game. In such a case, the button 13 is not necessarily required.

The content instructed by operating the lever 11 is a moving direction and a moving speed of a player when the player operated by the game player simply moves or the player keeps a ball to dribble it by myself. Also, the instructed content is a moving direction of the kicked ball when the operated player kicks the ball to make a pass or a shot.

In the present carrying out mode, an analog lever is used as the lever 11. In the analog lever, two variable resisters (hereinafter called "x-volume and y-volume") for varying a resistance value by rotating their shafts are disposed so that the mutual shafts become perpendicular to each other, and the root portion of a shaft of the lever 11 is connected to the shaft of each volume through gear, etc. and the respective shafts of the x-volume and the y-volume are designed to rotate according to an inclined direction of the lever 11 and the angle of inclination.

Only the x-volume rotates when the lever 11 is inclined in the x direction or the direction reverse to the x direction (transverse direction), and only the y-volume rotates when the lever 11 is inclined in the y direction or the direction reverse to the y direction (longitudinal direction). Further, both of the x-volume and the y-volume rotate by the amount inclined in the respective directions when the lever 11 is inclined in any direction other than the x and y directions. A control part 35 described below always monitors the resistance values of the x-volume and the y-volume at regular intervals. The control part 35 performs vector calculation on the basis of these resistance values and recognizes the inclined direction and the inclined angle of the lever 11. When the inclined direction and the inclined angle of the lever 11 are continuously varied, the angle of rotation of each the shaft of the x-volume and the y-volume also varies continuously and thereby, the resistance value of each the volume varies continuously. Thus, the inclined direction and angle recognized by the control part 35 also become continuous.

In a conventional soccer game apparatus, an eight-directional lever has been generally used as a manually operated lever. Since the operable directions are limited to discrete values by 45 degrees in the eight-directional lever, the eight-directional lever can reduce a load on control of the game apparatus in comparison with the analog lever. In this case, when a pass is made toward a player of the same side residing between two the adjacent directions of the eight-directional lever, such a situation has been handled by a method in which the lever is inclined in either of the nearer direction and thereafter the game apparatus properly decides it to assist the game player in software techniques.

However, the controllable directions are discrete in the eight-directional lever, so that experience to some extent is required to operate the lever well with the result that there has been a problem that it is difficult for a beginner to operate at will. Also, since the controllable directions are discrete, a software assist by the game apparatus in controlling the directions is required, and this results in a problem that it is difficult for an advanced game player to subtly operate at will and substantial enjoyment of the soccer game as the lever is inputted in the correct direction is counteracted. On the contrary, for the analog lever, continuous control of direction can be performed, so that the operation is easy even for a beginner and a skilled game player also can perform advanced operations by subtle control of direction.

Next, the kick input part 12 provided below the game apparatus will be described. The main content operated by the kick input part 12 is the indication for starting of movements such as a pass, a shot and a sliding tackle made by the operated player, adjustment of a ball speed kicked by a pass or a shot, and adjustment of an angle of elevation when kicking up a loop shot or a fly ball.

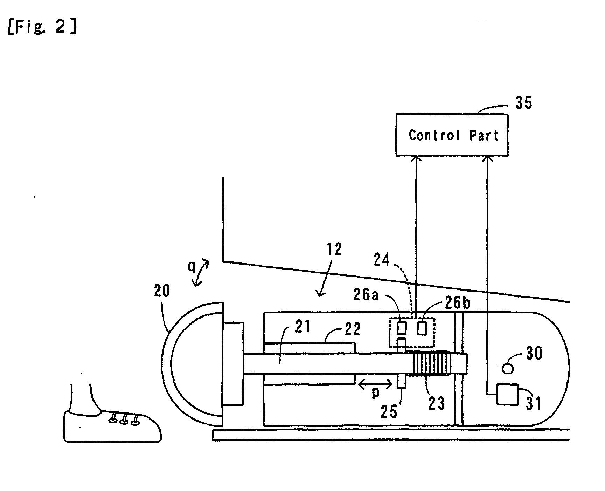

Fig.2 is a sectional view illustrating structure of the kick input part 12. A ball part 20 for being kicked by a game player like a actual soccer player is provided in the kick input part 12. The ball part 20 is a hemisphere with the almost the same radius as an actual soccer ball, and the surface of the ball part 20 is formed of materials identical or similar to the soccer ball and the surface is also formed in the same pattern as the soccer ball as recognized at a glance.

A bar-shaped shaft 21 is provided behind the ball part 20 and the hemispherical ball part 20 is fixed in the top end of the left side of this shaft 21. The shaft 21 is supported by a bearing 22 and structured to be movable transversely as shown in arrow p. One end of a spring 23 into which the shaft 21 is inserted is fixed in the game apparatus body and the other end of the spring 23 is fixed in the shaft 21. By this spring 23, the shaft 21 is energized in the left direction of Fig.2, and the ball part 20 and the shaft 21 are positioned at the leftmost side in normal condition. In this case, the hemisphere of the ball part 20 protrudes from the lower portion of the game apparatus so as to be opposed to a toe of the game player as shown in Fig.2.

From such a feature of appearance, even a beginner immediately finds at first sight that this game apparatus is made exclusively for soccer game only. Also, a viewer of this apparatus may guess by intuition that the game player would kick the ball part 20 because of the position where the ball part 20 is provided or the shape closely similar to the true soccer ball. Further, as shown in Fig.1, the items the game player have to handle are the lever 11, the. kick input part 12 and the button 13 only.

In such a manner, the content or operation method of the game can be understood to some degree at sight of appearance and operating parts decrease compared with a conventional soccer game, so that a beginner tending to avoid the soccer game can show interest in the soccer game and effect of prompting to play the game actually is high. Also, it is empirically known that the degree of absorption in the game is higher as the operations of the game apparatus are simple and the movements for operating the game apparatus are close to the movements of actual sports. In the soccer game apparatus of the present carrying out mode, as described above, only the movements for kicking the ball part 20 and the operation for inclining the lever 11 in the necessary direction are required, so that the degree of absorption in the game of the game player becomes considerably high when the game player actually plays the game.

When the game player kicks the ball part 20 of the kick input part 12, the ball part 20 moves in the right direction (direction toward the back of the game apparatus) of Fig.2 at a speed in response to the kicked force. At this time, the shaft 21 integrally provided in the ball part 20 moves in the right direction with the shaft 21 supported in the bearing 22 and is energized in the left direction due to the restitution force of the spring 23 after the shaft 21 moves to some degree, and the ball part 20 and the shaft 21 are pushed back to the original position again. In this case, a stroke at which the ball part 20 is displaced becomes longer as the game player kicks strongly.

In this manner, when the game player kicks the ball part 20, the ball part 20 is moved and displaced even temporarily. Because of this, the game player feels that the leg kicking the ball actually follows through. Further, since the stroke length of the displaced ball part 20 is proportional to the kicked strength, the game player has a feeling very close to the state of actually playing the soccer.

A sensor (not shown) for detecting that the ball part 20 is kicked, and another sensor 24 for detecting a displacement speed of the shaft 21 are provided in the kick input part 12. The speed sensor 24 comprises a reflecting member 25 mounted in the shaft 21 and two photosensors 26a and 26b provided along the longitudinal direction of the shaft 21, and calculates the displacement speed of the shaft 21 from the time interval in which the reflecting member 25 passes between the photosensors 26a and 26b.

As described above, the displacement speed of the shaft 21 has a strong correlation with the strength of the kicking force when the ball part 20 is kicked. So, in the game apparatus of the present carrying out mode, the displacement speed of the shaft 21 is measured by the speed sensor 24 and the measured value is sent to the internal control part 35. The control part 35 controls a speed of the ball kicked and moving in the screen according to this signal.

In the conventional game apparatus, a plurality of buttons such as "strong kick" button or "weak kick" button are provided and the game player selects the proper button to push according to circumstances. However, the movements to push the right button quickly without fail in this manner is entirely different from the movements of actual soccer in which the players control the ball speed by adjusting the kicking force given to the ball by their legs.

On the contrary, when it is designed so as to change the speed of the ball kicked by the player in the screen in response to the kicked force given from the game player to the ball part 20 by kicking the ball as described in the present carrying out mode, the movements of operating the game becomes very close to the movements of actual soccer and also the movements of the game player becomes almost the same as that of the player in the screen. As a result, the game player can play the game with the about same feeling as playing the actual soccer. In addition, the "strong kick" button or "weak kick" button, etc. are eliminated and an operating panel is simplified, so that the apparatus can avoid being kept away from by the persons who see the apparatus for the first time.

Moreover, in the game apparatus of the present carrying out mode, as shown in Fig.2, it is designed so that the whole of the kick input part 12 may be rotated around a fulcrum 30 in the certain range of angle. When the game player puts the leg's tip in the lower portion of the ball part 20 as shown in Fig.2 and kicks up the ball part 20 by the leg's instep, the whole unit of the kick input part 12 is rotated around the fulcrum 30 as indicated by arrow q.

An angular sensor 31 is provided in the vicinity of the fulcrum 30 and detects a rotational angle of this unit around the fulcrum 30. Data of the detected rotational angle is sent to the control part 35, and using this data, the control part 35 controls an angle of elevation when techniques such as a loop shot or a fly ball are performed with the game apparatus as described below.

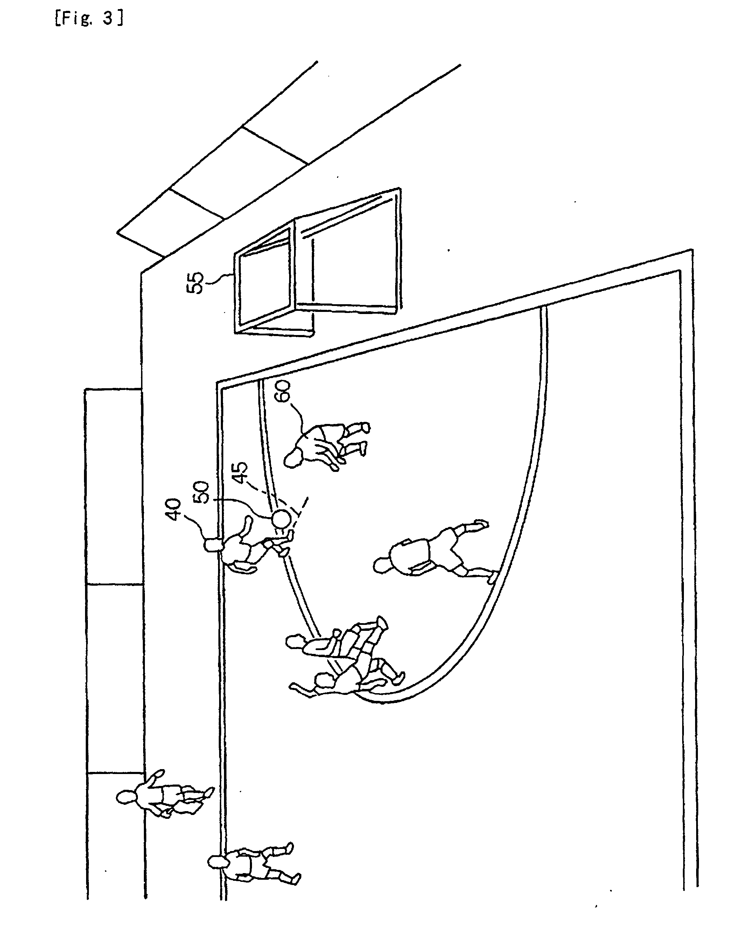

Next, the movements of the players and the ball on the screen when the above-mentioned lever 11 and kick input part 12 is operated will be described. Fig.3 is an enlarged display screen showing a situation in the vicinity of an opposition goal as one example. The displayed player 40 is a player operated by a game player for currently playing a game in this game apparatus.

When the player 40 operated by the game player is keeping a ball, a straight broken line 45 is displayed at the player's feet. A direction of this straight line 45 points to the moving direction of the kicked ball when the game player kicks the ball part 20 of the kick input part 12. The straight line 45 is displayed so that the control part 35 takes the resistance values of the x-volume and the y-volume provided in the above-mentioned lever 11 to perform vector operations and thereby the direction is calculated and further corresponds to an inclined direction of the lever 11. That is, the straight line 45 points to the right direction if the lever 11 is inclined to the right side, and the straight line 45 points to the back direction if the lever 11 is inclined to the back side of the game apparatus (the side distant from the game player). Further, if the game player rotates the lever 11, the straight line 45 also rotates continuously (not discretely) around the player 40 on the screen, so that the straight line 45 can be directed to an arbitrary direction by operating the lever 11. Thus, the game player can arbitrarily select the moving direction of a kicked ball.

When the player 40 operated by the game player does not keep a ball, the straight line 45 is not displayed at the feet of the player 40. In this case, the inclined direction of the lever 11 is a moving direction of the player.

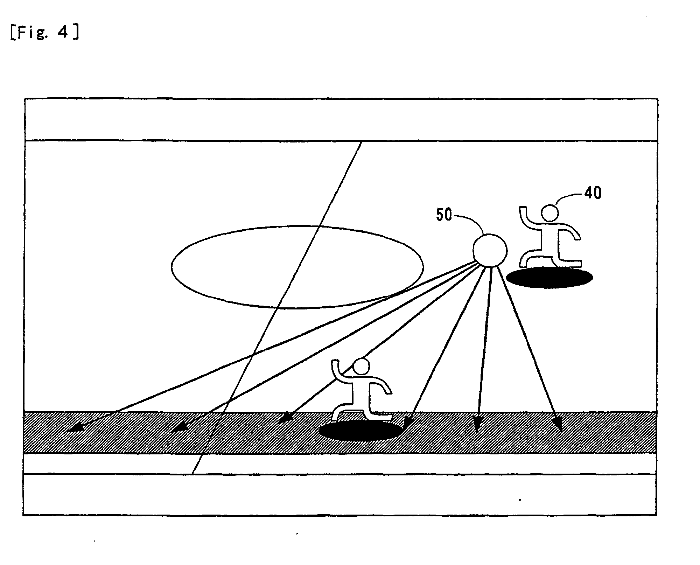

Fig.4 illustrates the fact that a player 40 currently operated by the game player can kick a ball 50 in arbitrary directions shown by many arrows to make a pass or a shot according to the game apparatus of the present carrying out mode. On the actual screen, the one straight line 45 described above is displayed at the feet of the player 40 and the game player inclines the lever 11 in a direction of wishing to kick the ball. Then, the ball is flying to the pointing direction of the straight line 45 at the instant when the ball part 20 is kicked. Incidentally, for convenience of showing, Fig.4 indicates the arrows in discrete directions, but the kicking between the adjacent arrows each other may be made in the actual game.

When it is designed so that the directions of kicking the ball can arbitrarily be controlled in this manner, various techniques used in actual soccer can easily be performed on the game apparatus. As one example of the techniques, a through-pass will be described. The through-pass is a technique that when a player tries to pass a ball he keeps to another player of the same side, in the case that a pass cannot be made toward the player of the same side because of the presence of a player of an opposition team between he and the player of the same side, the ball is kicked to the side of the player of the opposition team at a speed and timing in such degree that the opposition player cannot catch the ball and then the ball is passed to the player of the same side who has moved to the position quickly by expecting the pass in advance.

For the conventional eight-directional lever in which passable directions are limited to discrete directions, it is difficult to perform the through-pass technique on the game apparatus, as a result of that, it was necessary to provide a button for the exclusive use for through-pass.

On the other hand, when using the analog lever as indicated in the present carrying out mode, the direction of kicking a ball can arbitrarily be controlled by the lever 11, so that the through-pass results in success if the inclined direction of the lever 11 is proper, and the ball is robbed by the opposition player or the player of the same side cannot receive the ball if the inclined direction of the lever 11 is not proper. Also, the through-pass may not be made well if the strength of kicking is not proper even in the case that the timing of kicking the ball part 20 and the inclined direction of the lever 11 are proper. That is, the situation similar to that of the actual soccer occurs even in the game.

According to the game apparatus of the present carrying out mode, the high techniques as performed in actual soccer can easily be implemented on the game apparatus, and further the movements of the players on the screen resemble the operating method of the game player and thereby instinctive operations can be performed. Also, repeating the game is required to some degree to master such high techniques and this point also resembles actual soccer. As a result, a strong incentive for trying again can be provided for the person which has once played this game apparatus.

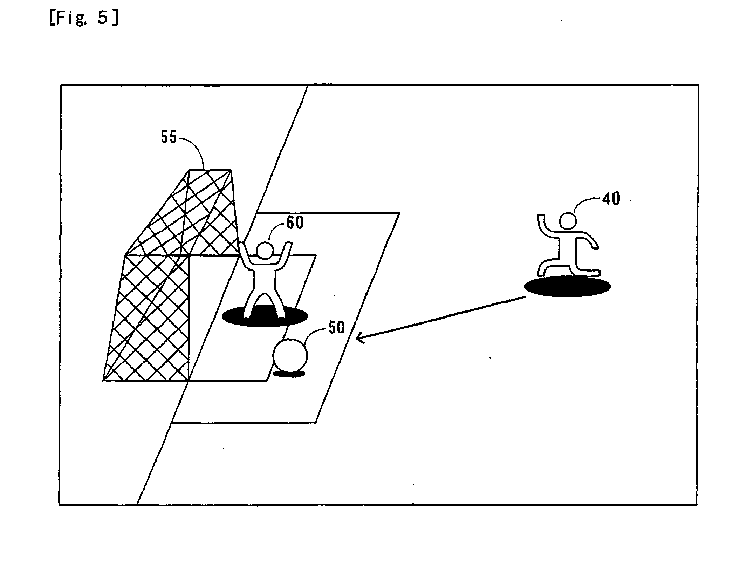

Fig.5 illustrates a situation immediately after a player 40 operated by the game player kicks a ball toward a goal 55 in the vicinity of the opposition goal. At this time, if the game player strongly kicks the ball part 20 in the condition of directing the straight line 45 at the feet of the player to the proper direction by inclining the lever 11, there is a high possibility that the ball may reach the goal 55. On the other hand, there is a high possibility that a goal keeper 60 may catch the ball if a kick speed is low even in the case of directing the straight line 45 to the proper direction. In the present carrying out mode, since the kicked strength of the ball part 20 is detected by providing the speed sensor as shown in Fig.2, a speed of the ball within the game can be continuously changed in response to the kicked strength of the ball part 20, so that subtlety of kicking the ball part 20 has a great influence on progress of the game. This point is also similar to actual soccer and the soccer game can be played with a feeling closer to the actual soccer.

Also, as described above, instead of providing the speed sensor 24, an impact sensor can be incorporated into the ball part 20 and the strength of the force when the ball part 20 is kicked may be measured by the strength of the impact. However, in the case of using the impact sensor, there is a problem that variation in sensitivity tends to occur in respective game apparatus depending on various conditions when incorporating such impact sensor into the actual game apparatus. Thus, in the case of attaching importance to stability of the sensitivity, it is desirable to use the speed sensor rather than the impact sensor. But, it goes without saying that the embodiment using the impact sensor is also included in the technical scope of the present invention.

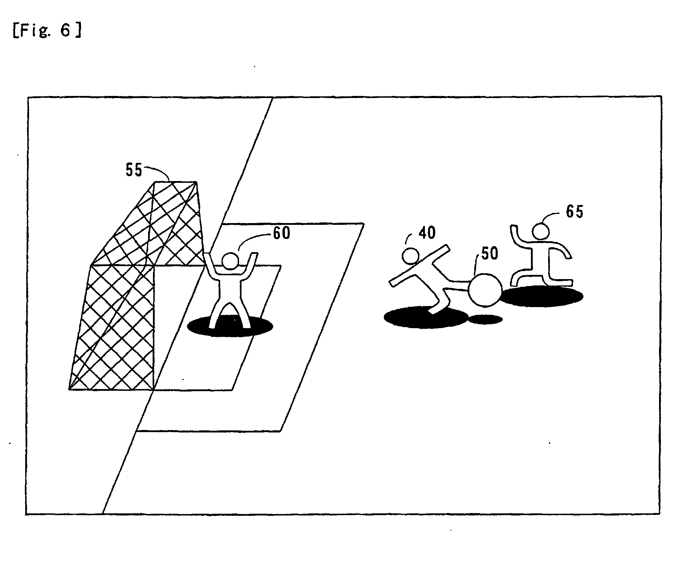

Further, in the game apparatus of the present carrying out mode, operations to make a sliding tackle against a player keeping a ball of an opposition team are also performed by the kick input part 12. Fig.6 illustrates a situation immediately after a player 40 operated by the game player intercepts a ball by making a sliding tackle to a player 65 of an opposition team keeping the ball. In the sliding tackle, first, using the lever 11, the operated player 40 is directed toward the player 65 of the opposition team against whom the sliding tackle is made. Next, when the game player kicks the ball part 20 in the situation that the player 65 of the opposition team exists in the area within a preset certain distance from the player 40 operated by the game player, the player 40 makes a sliding tackle against the player 65. If the direction and timing at that time are within a predetermined range, the ball can be intercepted from the opposition team.

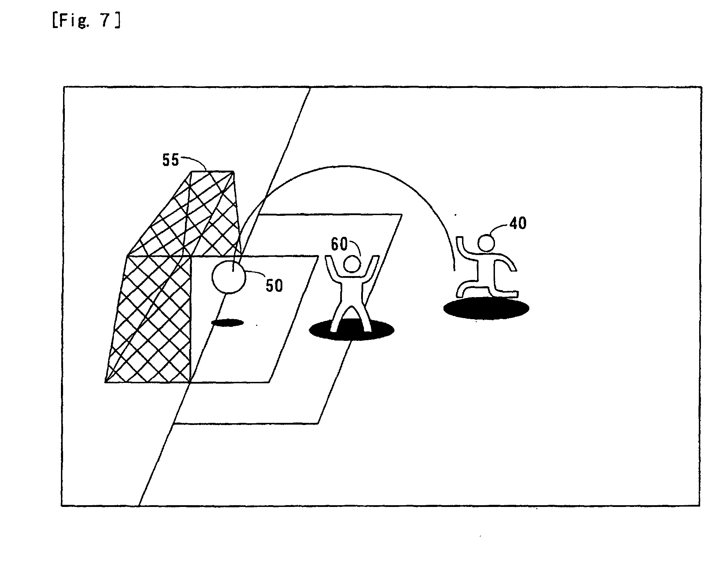

Moreover, in the game apparatus of the present carrying out mode, as described above, three-dimensional techniques such as a loop shot (in which the ball is kicked up so as to draw arc trajectories to go over the head of a player of the opposition team) or a fly ball (in which the ball is kicked up so as to draw arc trajectories to go over the head of a player of the opposition team) as is often the case with actual soccer can be executed on the game by performing a movement of kicking up the ball part 20 of the kick input part 12 from the lower to the upper. Fig.7 illustrates a situation immediately after a player 40 operated by the game player makes a loop shot like drawing trajectories over the head of a goal keeper 60 of the opposition team.

The control part 35 decreases an angle of elevation of the loop shot or the fly ball when a rotational angle in kicking up the ball part 20 is small, and increases an angle of elevation of the loop shot or the fly ball when a rotational angle is large. By providing such functions, more various plays can be enjoyed in comparison with a game apparatus in which directions of kicking a ball are limited to two-dimensional directions. But, the functions of the loop shot or the fly ball are not necessarily required and may be omitted according to circumstances.

Next, control in the apparatus of the present carrying out mode will be described.

As described above, the game apparatus of the present carrying out mode is largely characterized in that since the most of the operations can be performed by only two input means of the lever 11 and the kick input, part 12 and also the movements played by the game player for the operations resemble those of actual soccer, even a beginner of the game can instinctively operate the game with a feeling of playing actual soccer. In order to better implement such a characteristic, control operations performed by the control part 35 also have some characteristics.

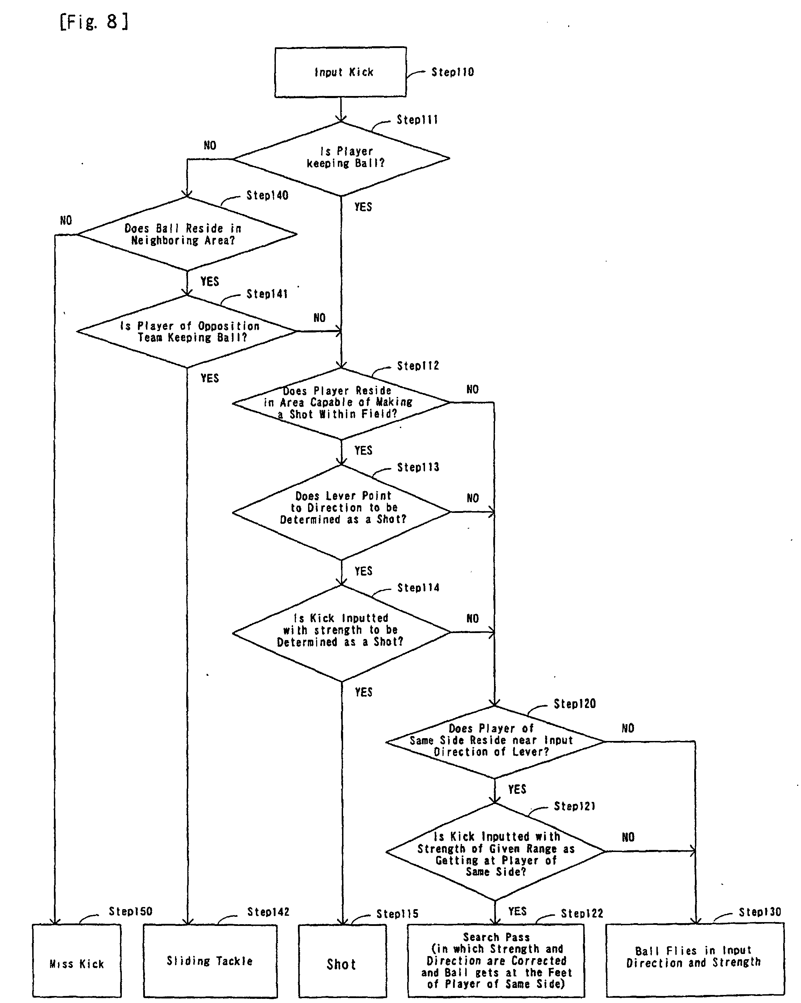

Fig.8 is a flowchart showing algorithm in which the control part 35 recognizes the movement how the ball part 20 of the kick input part 12 described above is kicked. Also, processing of making correction to a direction of the kicked ball and a speed of the ball is included in the algorithm shown in Fig.8. The reason why such correction is made is that the game may not proceed smoothly and may not be interesting for the game player in case he is a beginner when the correction is not made at all. But, for advanced persons, a mode of making limited correction or no correction can be selected as described below.

In Fig.8, when the ball part 20 of the kick input part 12 is kicked, a sensor (not shown) for detecting the ball part 20 in being kicked detects this and simultaneously sends a signal of that effect to the control part 35. When the control part 35 receives this signal and recognizes that the ball part 20 is kicked (Step 110), it is first determined whether a player operated by a game player is keeping a ball or not (Step 111). If said player is keeping the ball, it is next determined whether the player resides in an area capable of making a shot within a field or not (Step 112). This "area capable of making a shot" is previously defined and it is programmed so that a shot cannot be made from the other area.

In Step 112, if it is determined that the player resides in the area capable of making a shot, it is determined whether the direction of directing the lever 11 when the ball part 20 is kicked has pointed to a direction of a given range to be determined as a shot or not (Step 113). This is because the kick movement is not necessarily a shot depending to the direction of directing the lever 11 even if the operated player resides near a goal. For example, if the lever 11 points to the direction reverse to an opposition goal, it must be determined that it was not a shot but a back pass to a player of the same side, and such a point is considered by processing of Step 113.

In Step 113, if it is determined that the lever 11 has pointed to the direction of the given range to be determined as a shot, it is determined whether the kick strength in kicking the ball part 20 has exceeded a given strength or not (Step 114). This is because, for example, a pass may once be made to a player of the same side by weak kicking and the player may perform a shot movement as described below even if the kicked direction is within the given range including the goal. Incidentally, the kick strength is determined on the basis of a signal from the speed sensor 24 shown in Fig.2.

In Step 114, if it is determined that the kick strength has exceeded the given strength, it is finally determined as a shot (Step 115) and the game apparatus simulates moving trajectories of the ball kicked with the direction and strength to display the situation on the screen. Incidentally, since processing from Step 110 to Step 115 is executed at high speed by the control part 35 of the game apparatus, it appears on the screen that the shot is made at the instant when the ball part 20 is kicked.

Subsequently, the control part 35 instantly determines whether the shot ball has reached the goal, whether the ball has missed the goal and whether the ball has been caught by an opposition goal keeper, etc. on the basis of given algorithm (not shown), and performs processing according to the respective cases. Concretely, for example, if a goal has been made, the goal scene is replayed and also Situations where the same scene is viewed from various directions are displayed. Also, if a ball has flown very near to a goal keeper, processing for the goal keeper to catch the ball is performed.

On the other hand, if it is determined that the player does not reside in the area capable of making a shot in Step 112, if it is determined that the lever 11 has not pointed to the direction capable of making a shot in Step 113, or if it is determined that the kick strength has not exceeded the prescribed strength in Step 114, it is determined whether a player of the same side resides near the direction of directing the lever 11 or not (Step 120).

In Step 120, if it is determined that the player of the same side resides near the direction of directing the lever 11, it is determined whether the kick has been made with the strength of a proper range as getting at the player of the same side (Step 121). The reason why the kick strength has a certain range as "the strength of a proper range" here is that the control part 35 corrects the strength of the kicked ball and assists the game player. In this case, if no assistance is given, it is difficult for the game player to kick the ball part 20 with a proper strength, so that a pass fails in most instances and the game does not proceed smoothly and, as a result, the game does not become interesting.

In Step 121, if it is determined that the strength is within the proper range, the control part 35 corrects a fly direction and a speed (strength in kicking) of the ball so as to make a search pass in which the ball well gets at the feet of said player of the same side, and controls the ball so as to move on the screen based on the correction (Step 122).

If it is determined that the player of the same side does not reside near the direction of directing the lever 11 in Step 120, or if it is determined that the kick strength is without the proper range in Step 121, the ball is controlled so as to fly in the direction of directing the lever 11 at a speed in response to the kicked strength without the correction (Step 130).

On the other hand, in Step 111, if it is determined that the operated player is not keeping the ball, it is determined whether the ball resides in a given neighboring area around the operated player or not (Step 140), and if the ball resides in this neighboring area, it is determined whether a player of an opposition team is keeping the ball or not (Step 141). Here, if the player of the opposition team is keeping the ball, it is determined that a movement in which the game player has kicked the ball part 20 is a sliding tackle (Step 142). Then, the control part 35 performs an image display corresponding to the sliding tackle. Further, if it is determined that the timing or direction of the sliding tackle is proper, the control part 35 determines that the player operated by the game player has intercepted the ball and performs subsequent control accordingly.

In Step 140, if it is determined that the ball does not reside in the given neighboring area, it is determined that the kick at that time is a vain kick, namely miss kick (Step 150) and a movement of the miss kick is displayed on the screen and also it is controlled so as not to have any effect on progress of the game.

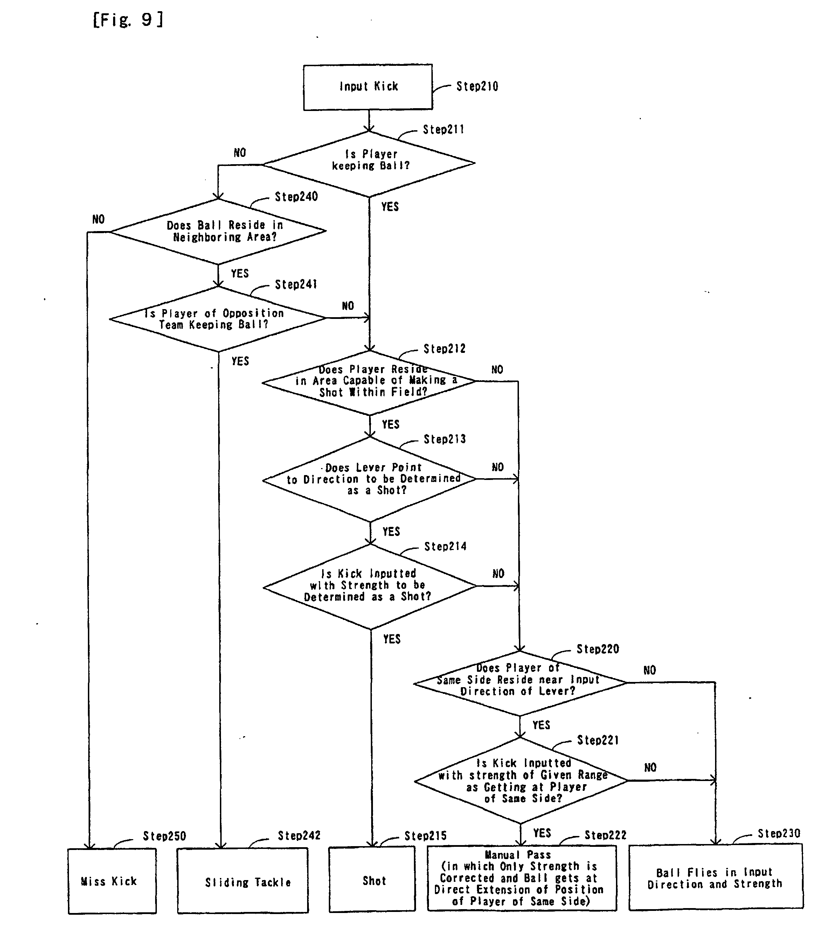

Fig.9 is a flowchart showing another example of algorithm in which the control part 35 recognizes what kind of action it is when the ball part of the kick input part 12 described above is kicked. The algorithm shown in Fig.9 is different from the algorithm shown in Fig.8 in processing of Steps 221 and 222. Since the other Steps of Fig.9 are identical to those of Fig.8, only Steps 221 and 222 will be described here.

In Step 122 of Fig.8, both of the fly direction and strength of the ball are corrected, but in Step 222 of Fig.9, the direction is not corrected and only the strength of the ball is corrected (manual pass). If the correction is made by such a method, the technique like the through-pass described above becomes easy to succeed for even beginners to some extent. In this case, since the direction of kicking the ball is not corrected, if the game palyer tries to make a through-pass and kicks the ball toward the position slightly shifted from the position in which a player of the same side resides, the ball flies in the direction. But, since the strength in kicking the ball part 20 is difficult to control, if no correction is made, there are of frequent occurrences that the strength is too strong and the ball goes out a field or the strength is too weak and the ball is caught by an opposition player, with the result that the game does not become interesting.

On the other hand, in the algorithm of Fig.9, if the ball strength determined in Step 221 is within a certain range, the ball strength is corrected so that the ball stops on a direct extension of a moving direction of a player of the same side to be passed. As a result of this, the high technique of the through-pass can easily be implemented to some degree and interest of the game increases.

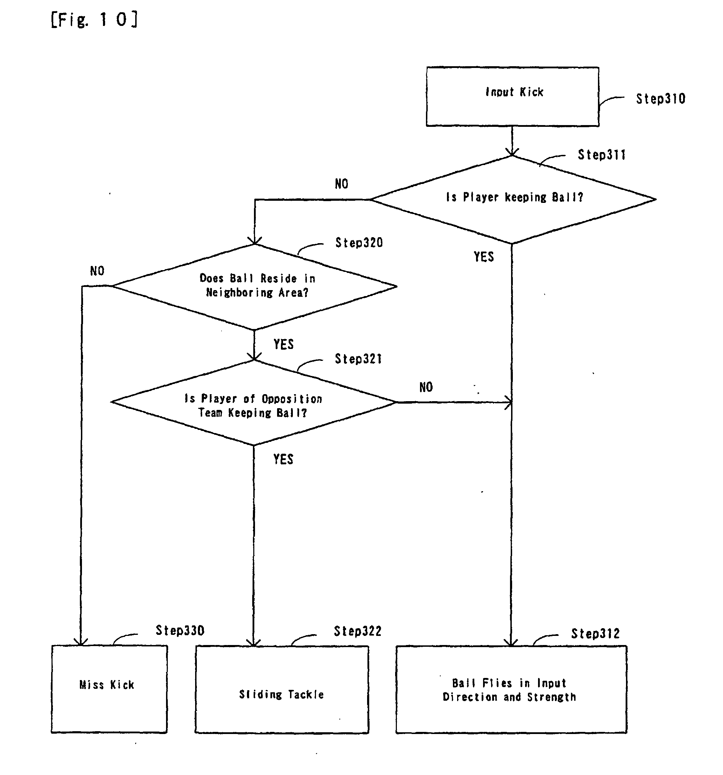

Fig.10 is a flowchart showing a further example of algorithm in which the control part 35 recognizes what kind of action it is when the ball part of the kick input part 12 described above is kicked. In the algorithm shown in Fig.10, when the ball part 20 is kicked, it is not determined whether it is a pass or a shot and the direction or strength of the kicked ball is not corrected at all. Thus, this is the mode for advanced person considerably skilled in operations of this game apparatus.

In Fig.10, when the ball part 20 of the kick input part 12 is kicked, a sensor (not shown) for detecting the ball part 20 in being kicked detects this and simultaneously sends a signal of that effect to the control part 35. When the control part 35 receives this signal and recognizes that the ball part 20 is kicked (Step 310), it is determined whether a player operated by a game player is keeping a ball or not (Step 311). If said player is keeping the ball, without determining whether the player resides in a given area or not, it is controlled so that the ball flies in a direction inputted by the lever 11 in response to the kicked strength of the ball part 20 (Step 312).

On the other hand, in Step 311, if it is determined that the operated player is not keeping the ball, it is determined whether the ball resides in a given neighboring area around the operated player or not (Step 320), and if the ball resides in this neighboring area, it is determined whether a player of an opposition team is keeping the ball or not (Step 321). Here, if the player of the opposition team is keeping the ball, it is determined that a movement in which the game player has kicked the ball part 20 is a sliding tackle (Step 322). Then, the control part 35 performs an image display corresponding to the sliding tackle. Further, if it is determined that the timing or direction of the sliding tackle is proper, the control part 35 determines that the player operated by the game player has intercepted the ball from the player of the opposition team and performs subsequent control accordingly.

On the other hand, in Step 320, if it is determined that the ball does not reside in the given neighboring area, it is determined that the kick at that time is a vain kick, namely miss kick (Step 330) and a movement of the miss kick is displayed on the screen and also it is controlled so as not to have any effect on progress of the game.

Though the algorithm in which the control part 35 recognizes what kind of action it is when the ball part of the kick input part 12 is kicked has been described on the basis of Figs. 8 to 10 above, which algorithm is proper depends on degree of proficiency of a game player of this game. Because of this, operation means for selecting levels of a game is provided in the game apparatus and if a game player selects the preferable level before starting the game, it is desirably designed so as to operate in the algorithm according to the level. Of course, it is possible to use only single algorithm from the beginning without means for selecting levels.

### [Second mode for carrying out the invention]

Next, the second carrying out mode of the present invention will be described. In a game apparatus of the present carrying out mode, a view showing the whole appearance is omitted since the it is similar to that of the game apparatus of the first carrying out mode shown in Fig.1.

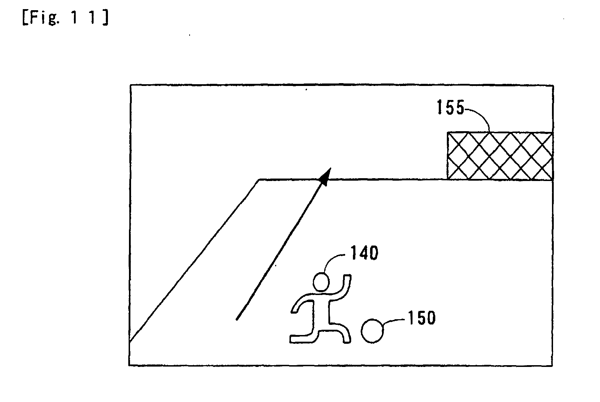

In the first carrying out mode, an image viewed from the side of a field has been used as a display of the field during play in normal condition. On the contrary, in the present embodiment, an image viewable from the position placing a viewpoint at the slight back of a player 140 operated by a game player is displayed as shown in Fig.11. Because of this, if the player changes the direction, an angle displayed also changes accordingly. Thus, on a screen a situation similar to that of the field viewable from the player operated by the game player along with the rear figure of the player are displayed, and if the player is attacking while keeping a ball 150, a goal 155 of the opposition team is displayed in the background of the screen.

The game apparatus of the present carrying out mode is similar to that of the first carrying out mode in points that most of operations can be performed by using a lever 11 and a kick input part 112 and directions to which the player points can be continuously controlled using an analog lever as the lever 11. But, in the present embodiment, only a direction in which the player moves is operated by the lever 11 and a direction of kicking a ball is controlled by the kick input part 112.

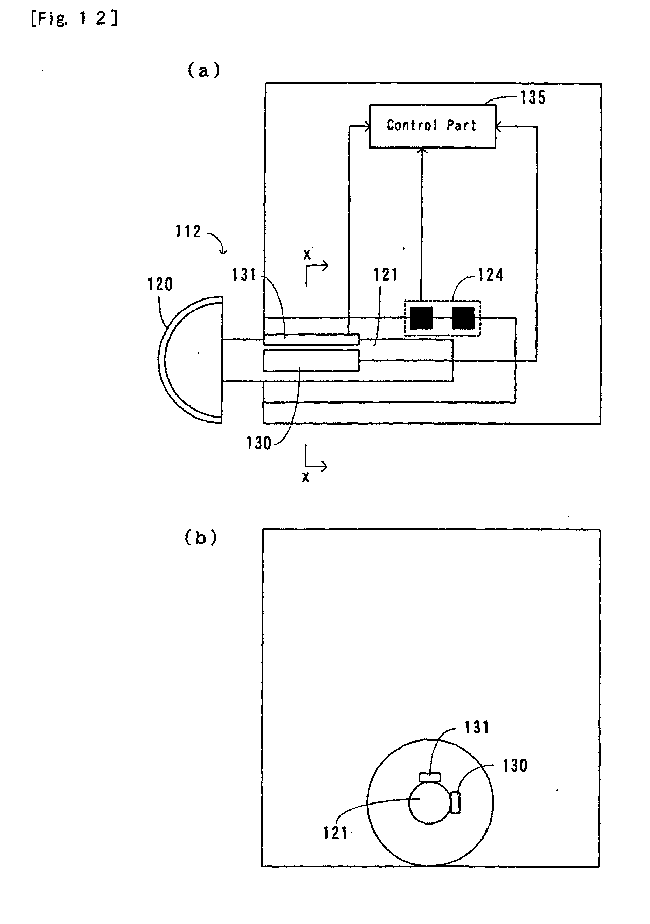

Fig.12 is an illustration showing the kick input part 112 of the game apparatus of the present carrying out mode, and Fig.12(a) is a transverse sectional view and Fig.12(b) is a sectional view taken on line x-x of Fig.12(a). Also, in the kick input part 112 of Fig.12 similar to the kick input part 12 of the first embodiment, the strength in kicking a ball is obtained by detecting a movement speed of a shaft 121 in kicking a ball part 120 with a speed sensor 124. Further, in the kick input part 112 of the present carrying out mode, a strain sensor 130 is provided in the side of the shaft 121 and a strain sensor 131 is provided in the upper of the shaft 121, and using the two strain sensors, it is detected which direction the game player has kicked the ball part 120 and a control part 135 controls a fly direction of the ball on the game on the basis of the detected signal.

The shape of the strain sensors 130 and 131 stain according to the kicked impact and they output a signal proportional to the magnitude of the strain. Also, it can be detected whether the shocked direction is a plus direction (direction of compressing the strain sensor in a direction of plate thickness) or a minus direction (direction of expanding the strain sensor in a direction of plate thickness).

Therefore, for example, the strain sensor 130 does not strain if the game player kicks the ball part 120 from the front, but the strain sensor strains in the plus direction if the game player kicks the ball part 120 from the left and the strain sensor strains in the minus direction if the game player kicks the ball part 120 from the right. Also, the strain sensor 131 does not strain if the game player kicks the ball part 120 from the front, but the strain sensor 131 strains in the plus direction if the game player kicks up the ball part 120 in a direction toward the upper from the lower. The control part 135 receives signals from these strain sensors 130 and 131, and calculates a direction in which the ball is to fly by performing vector operations on the basis of these signals.

In the present carrying out mode thus, the direction in which the ball is to fly can also be operated by a direction of kicking the ball part with the leg, so that the game player can enjoy with a feeling closer to actual soccer. But, instead of using the strain sensors 130 and 131, it may be designed so that a part of the kick input part 112 is mounted so as to rotate in response to a kick direction and a direction of kicking the ball part is detected on the basis of the rotational direction and rotation angle.

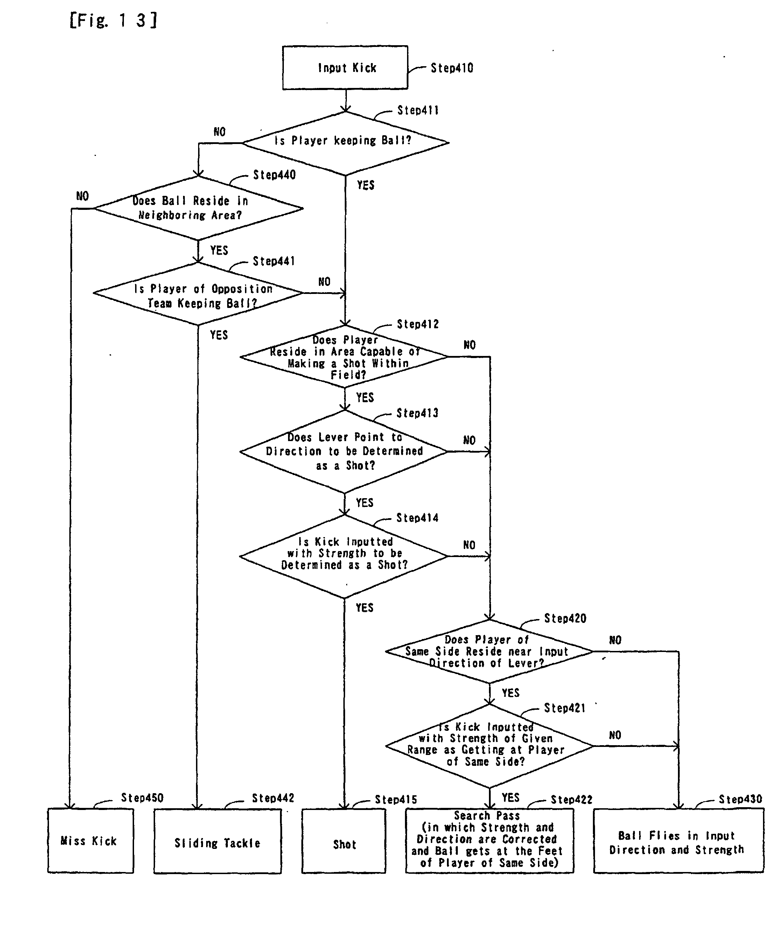

Fig.13 is a flowchart showing algorithm in which the control part 35 recognizes what kind of action it is when the ball part 120 of the kick input part 112 of the present carrying out mode is kicked. Also, in the algorithm shown in Fig.13, processing of making correction to a direction of the kicked ball and a speed of the ball is included, but a mode of making no correction or a mode of making the limited correction can be adopted by selection of the game player similar to the first embodiment.

In Fig.13, when the ball part 120 of the kick input part is kicked, a sensor (not shown) for detecting the ball part 120 in being kicked detects this and simultaneously sends a signal of that effect to the control part 135. When the control part 135 receives this signal and recognizes that the ball part 120 is kicked (Step 410), it is first determined whether a player operated by a game player is keeping a ball or not (Step 411). If said player is keeping the ball, it is next determined whether the player resides in an area capable of making a shot within a field or not (Step 412). This "area capable of making a shot" is previously defined by a program and it is programmed so that a shot cannot be made from the other area.

In Step 412, if it is determined that the player resides in the area capable of making a shot, it is determined whether a direction in kicking the ball part 120 has pointed to a given direction to be determined as a shot or not (Step 413). This is because the kick movement is not necessarily a shot depending on the direction of kicking the ball even if the operated player resides near a goal as described above.

In Step 413, if the direction of kicking the ball has pointed to the direction to be determined as a shot, it is determined whether the kick strength in kicking the ball part 120 has exceeded a given strength or not (Step 414). As described above, this is because, for example, a pass may once be made to a player of the same side by weak kicking and the player may perform a shot movement as described below even if the kicked direction is within a certain angle range including the goal. Incidentally, the kick strength is determined on the basis of a signal from the speed sensor 124 described above.

In Step 414, if the kick strength has exceeded the given strength, it is finally determined as a shot (Step 415) and the game apparatus simulates moving trajectory of the ball kicked with the direction and strength to display the situation on the screen. Incidentally, since processing from Step 410 to Step 415 is executed at high speed by the control part 135 of the game apparatus, it appears on the screen that the shot is made at the instant when the ball part 120 is kicked.

Subsequently, as described above, the control part 135 instantly determines whether the shot ball has reached the goal, has missed the goal or has been caught by an opposition goal keeper, etc. on the basis of given algorithm (not shown), and performs processing according to the respective cases. Concretely, for example, if a goal has been made, the goal scene is replayed and also situations where the same scene is viewed from various directions are displayed. Also, if a ball has flown very near to a goal keeper, processing for the goal keeper to catch the ball is performed.

On the other hand, if it is determined that the player does not reside in the area capable of making a shot in Step 412, if it is determined that the direction of kicking the ball has not pointed to the direction capable of making a shot in Step 413, or if it is determined that the kick strength has not exceeded the given strength in Step 414, it is determined whether a player of the same side resides near the advance direction of the kicked ball or not (Step 420).

In Step 420, if it is determined that the player of the same side resides near the advance direction of the kicked ball, it is determined whether the kick has been made with the strength of a given range as getting at the player of the same side (Step 421). The reason why the kick strength has a certain range as "the strength of a given range" here is that the control part 135 corrects the strength of the kicked ball and assists the gamer. In this case, if no assistance is given, the it is difficult for the game player to kick the ball part 120 with a proper strength, so that a pass fails in most instances and on the contrary, the game does not become interesting.

In Step 421, if it is determined that the strength is within the given range, the control part 135 corrects a fly direction and a speed (strength in kicking) of the ball so as to make a search pass in which the ball well gets at the feet of said player of the same side, and controls the ball so that the ball moves on the screen based on the correction (Step 422).

If it is determined that the player of the same side does not reside near the direction of kicking the ball in Step 420, or if it is determined that the kick strength is without the given range in Step 421, the ball is controlled so as to fly in the direction of actually kicking the ball on the screen at a speed in response to the strength when the ball part 120 is actually kicked (Step 430).

On the other hand, in Step 411, if it is determined that the operated player is not keeping the ball, it is determined whether the ball resides in a given neighboring area around the operated player or not (Step 440), and if the ball resides in this neighboring area, it is determined whether a player of an opposition team is keeping the ball or not (Step 441).

Here, if it is determined that the player of the opposition team is keeping the ball, it is determined that a movement in which the game player has kicked the ball part 120 is a sliding tackle (Step 442). Then, the control part 135 performs an image display corresponding to the sliding tackle. Further, if it is determined that the timing or direction of the sliding tackle is proper, the control part 135 determines that the player operated by the game player has intercepted the ball from the player of the opposition team and performs subsequent control accordingly.

In Step 440, if it is determined that the ball does not reside in the given neighboring area, it is determined that the kick at that time is a vain kick, namely miss kick (Step 450) and a movement of the miss kick is displayed on the screen and also it is controlled so as not to have any effect on progress of the game.

Though the first and second carrying our modes have been described above, the present invention is not limited to the above carrying out modes, and various changes may be made within the technical scope of the invention. For example, in the above embodiments, the present invention is applied to a soccer game apparatus, but ideas of the present invention are not limited to a soccer game, and the present invention may also be applied to various games other than soccer, for example, ball games such as futsal, volleyball, handball, and basketball.

As described above, according to the present invention, by providing first operation means for instructing a direction and second operation means for outputting a signal instructing a start of the movements which an object of operation performs and also detecting a magnitude of a dynamic physical quantity given from a game player by operations of the game player to output a signal indicating the magnitude, even a beginner can easily understand an operation method and various ball games can be played by a small number of operation means.

Also, when the present invention is applied to a soccer game in which the first operation means is operated by hand and the second operation means is operated by leg, the movements for operations of the game resemble the movements of actual soccer, so that the game player can play with a feeling of playing actual soccer. Particularly, when the dynamic physical quantity is set at the strength by which the game player kicks the second operation means and a ball speed in the game is changed in response to the strength, operations can be performed by the movements more similar to the actual soccer.

### INDUSTRIAL APPLICABILITY

As described above, a game apparatus according to the present invention can be widely used in the field of so-called arcade games mainly installed in an amusement arcade and so on.

## Claims

1. A game apparatus in which a game player uses operation means and operates movements of a player (40) and a ball (50) being objects of operation to play ball game sports, comprising:
first operation means (11a - 11d) for the game player for instructing a direction associated with various movements which at least the player (40) performs;
second operation means (12a- 12d) for the game player for outputting a signal instructing a start of the movements which the ball (50) performs and
control means (35) for controlling the movements of the objects of operation (40, 50) on the basis of the signal received from said first operation means (11a - 11d) and said second operation means (12a- 12d),
**characterised in that** the second operation means (12a - 12d) has a ball part (20) for being kicked by the game player constructed for being moveable transversely for outputting the signal instructing the start of the movement of the ball (50) and also outputting a signal indicating a magnitude of a dynamic physical quantity given by operations of the game player.

2. A game apparatus as defined in claim 1, wherein said dynamic physical quantity detected by the second operation means (12a- 12d) is a physical quantity associated with the strength of operations of the game player.

3. A game apparatus as defined in claim 1 or 2, wherein said first operation means (11a - 11d) is a means capable of continuously changing a direction instructing in response to a direction to which the game player inclines a bar-shaped lever (11a - 11d) from a neutral position, and
said second operation means (12a- 12d) is a means for also detecting a displacement speed of a ball part (20) to output the speed.

4. A game apparatus as defined in any one of the claims from 1 through 3, wherein said first operation means (12a- 12d) is a means for instructing a moving direction of the player (40) or a fly direction of a ball (50) kicked by said player (40) and
said second operation means (12a- 12d) instructs a start of a kick movement or a sliding tackle movement of the player (40).

5. A game apparatus as defined in claim 4, wherein said second operation means (12a - 12d) is installed so as to rotate within a vertical plane by a kickup action of the game player, and has an angle detecting means (31) for detecting the rotational angle to send the angle detection signal to the control means (35) and
said control means (35) controls an angle of elevation of a ball (50) which draws arc tracks to move on the basis of the angle detection signal.

6. A game apparatus as defined in anyone of the preceding claims, wherein a shape and a pattern of said ball part (20) are formed in imitation of a ball.

7. A game apparatus as defined in anyone of the preceding claims wherein an image displayed on a screen (10) during play is an image viewing a direction to which said player (40) points from a viewpoint at the back of said player (40), and
said first operation means (11a- 11d) is a means which the game player operates by hand to instruct a moving direction of a player (40) and
said second operation means (12a- 12d) is a means which the game player operates by leg to instruct a movement in which a player (40) kicks a ball (50) and also to instruct a speed and a direction of the kicked ball (50) by leg.

8. A game apparatus as defined in claim 7, wherein a ball direction in which the game player operates said second operation means (12a- 12d) by leg to instruct is a three-dimensional direction within a field.

9. A game apparatus as defined in claim 8, wherein said second operation means (12a - 12d) detects a direction in which the game player operates the operation means by leg to instruct using a speed sensor (24, 124) and two strain sensors (130, 131) placed in the perpendicular direction to each other.

## Patentansprüche

1. Spielvorrichtung, bei der eine spielende Person Betätigungsmittel verwendet und Bewegungen eines Spielers (40) und eines Balls (50), die Gegenstände der Betätigung sind, bewirkt, um einen Ballsport zu spielen, mit:
ersten Betätigungsmitteln (11a-11d), mit denen die spielende Person eine Richtung angibt, in denen verschiedene Bewegungen erfolgen, die wenigstens der Spieler (40) ausführt;
zweiten Betätigungsmitteln (12a-12d), mit denen die spielende Person ein Signal ausgibt, das einen Beginn der Bewegungen, die der Ball (50) ausführt, befiehlt; und
Steuermitteln (35), die die Bewegungen der Gegenstände (40, 50) der Betätigung anhand des von den ersten Betätigungsmitteln (11a-11d) und von den zweiten Betätigungsmitteln (12a-12d) empfangenen Signals steuern,
**dadurch gekennzeichnet, daß** die zweiten Betätigungsmittel (12a-12d) einen Ballabschnitt (20), der von der spielenden Person gestoßen werden soll, besitzen, der so konstruiert ist, daß er transversal beweglich ist, um das den Beginn der Bewegung des Balls (50) befehlende Signal auszugeben und um außerdem ein Signal auszugeben, das die Größe einer dynamischen physikalischen Größe angibt, die durch die Betätigungen der spielenden Person gegeben ist.

2. Spielvorrichtung nach Anspruch 1, bei der die dynamische physikalische Größe, die von den zweiten Betätigungsmitteln (12a-12d) erfaßt wird, eine physikalische Größe ist, die der Stärke der Betätigungen der spielenden Person zugeordnet ist.

3. Spielvorrichtung nach Anspruch 1 oder 2, bei der die ersten Betätigungsmittel (11a-11d) Mittel sind, die in Reaktion auf eine Richtung, in der die spielende Person einen stabförmigen Hebel (11a-11d) aus einer Neutralposition neigt, eine Befehlsrichtung kontinuierlich ändern können, und
die zweiten Betätigungsmittel (12a-12d) Mittel sind, die außerdem eine Verlagerungsgeschwindigkeit eines Ballabschnitts (20) erfassen, um die Geschwindigkeit auszugeben.

4. Spielvorrichtung nach einem der Ansprüche 1 bis 3, bei der die ersten Betätigungsmittel (12a-12d) Mittel sind, die eine Bewegungsrichtung des Spielers (40) oder eine Flugrichtung eines von dem Spieler (40) gestoßenen Balls (50) befehlen können, und
die zweiten Betätigungsmittel (12a-12d) einen Beginn einer Stoßbewegung oder einer gleitenden Angriffsbewegung des Spielers (40) befehlen können.

5. Spielvorrichtung nach Anspruch 4, bei der die zweiten Betätigungsmittel (12a-12d) so installiert sind, daß sie sich durch eine Aufwärtsstoßaktion der spielenden Person in einer vertikalen Ebene drehen können, und Winkelerfassungsmittel (31) besitzen, die den Drehwinkel erfassen, um das Winkelerfassungssignal zu den Steuermitteln (35) zu senden, und
die Steuermittel (35) einen Höhenwinkel eines Balls (50) steuern, der Bögen beschreibt, damit er sich auf der Grundlage des Winkelerfassungssignals bewegt.

6. Spielvorrichtung nach einem der vorhergehenden Ansprüche, bei der Form und Muster des Ballabschnitts (20) einem Ball nachgebildet sind.

7. Spielvorrichtung nach einem der vorhergehenden Ansprüche, bei der ein während des Spiels auf einem Bildschirm (10) angezeigtes Bild ein Bild ist, das eine Blickrichtung zeigt, in die der Spieler (40) von einem Standpunkt hinter dem Spieler (40) zielt, und
die ersten Betätigungsmittel (11a-11d) Mittel sind, die die spielende Person mit der Hand betätigt, um eine Bewegungsrichtung eines Spielers (40) zu befehlen, und
die zweiten Betätigungsmittel (11a-11d) Mittel sind, die die spielende Person mit dem Bein betätigt, um eine Bewegung zu befehlen, in die ein Spieler (40) einen Ball (50) stößt, und um außerdem eine Geschwindigkeit und eine Richtung des gestoßenen Balls (50) mit dem Bein zu befehlen.

8. Spielvorrichtung nach Anspruch 7, bei der eine Ballrichtung, in der die spielende Person die zweiten Betätigungsmittel (12a-12d) mit dem Bein befehlend betätigt, eine dreidimensionale Richtung in einem Feld ist.

9. Spielvorrichtung nach Anspruch 8, bei der die zweiten Betätigungsmittel (12a-12d) eine Richtung, in der die spielende Person die Betätigungsmittel mit dem Bein befehlend betätigt, unter Verwendung eines Geschwindigkeitssensors (24, 124) und zweier Dehnungssensoren (130, 131), die in zueinander senkrechten Richtungen angeordnet sind, erfassen.

## Revendications

1. Appareil de jeu avec lequel un joueur de la partie utilise des moyens d'actionnement et met en mouvement un joueur (40) et une balle (50) qui sont les objets en action pour jouer des sports de balle, comprenant :
un premier moyen d'actionnement (11a à 11d) permettant au joueur de la partie de commander une direction associée aux différents mouvements effectués par au moins le joueur (40) ;
un second moyen d'actionnement (12a à 12d) permettant au joueur de la partie de transmettre un signal commandant le démarrage des mouvements effectués par la balle (50) et
un moyen de commande (35) permettant de commander les mouvements des objets en action (40, 50) en se basant sur le signal reçu provenant dudit premier moyen d'actionnement (11a à 11d) et dudit second moyen d'actionnement (12a à 12d),
**caractérisé en ce que** le second moyen d'actionnement (12a à 12d) possède une partie de balle (20) destinée à être frappée par le joueur de la partie et qui est construite pour pouvoir se déplacer transversalement et pour transmettre le signal de commande du démarrage du mouvement de la balle (50) et également pour transmettre un signal indiquant une amplitude d'une grandeur physique dynamique déterminée par les actions du joueur de la partie.

2. Appareil de jeu selon la revendication 1, dans lequel ladite grandeur physique dynamique détectée par le deuxième moyen d'actionnement (12a à 12d) est une grandeur physique associée à la force d'actionnement exercée par le joueur de la partie.

3. Appareil de jeu selon la revendication 1 ou 2, dans lequel ledit premier moyen d'actionnement (11a à 11d) est un moyen capable de changer de manière continue une commande de direction en réponse à une direction suivant laquelle le joueur de la partie incline un levier en forme de tige (11a à 11d) par rapport à une position neutre, et
ledit second moyen d'actionnement (12a à 12d) est un moyen permettant également de détecter une vitesse de déplacement d'une partie de balle (20) et d'en transmettre la vitesse.

4. Appareil de jeu selon l'une quelconque des revendications 1 à 3, dans lequel ledit premier moyen d'actionnement (11a à 11d) est un moyen permettant de commander une direction de déplacement du joueur (40) ou une direction balistique d'une balle (50) frappée par ledit joueur (40) et
ledit second moyen d'actionnement (12a à 12d) commande un démarrage d'un mouvement de frappe ou un mouvement de tacle du joueur (40).

5. Appareil de jeu selon la revendication 4, dans lequel ledit second moyen d'actionnement (12a à 12d) est prévu pour tourner dans un plan vertical sous l'action d'une frappe du joueur de la partie, et possède un moyen de détection d'angle (31) permettant de détecter l'angle de rotation afin de transmettre le signal de détection d'angle au moyen de commande (35) et
ledit moyen de commande (35) commande un angle d'élévation d'une balle (50) qui définit les cheminements d'arc à déplacer en fonction du signal de détection d'angle.

6. Appareil de jeu selon l'une quelconque des revendications précédentes dans lequel une forme et un dessin de ladite partie de balle (20) sont formés par imitation d'une balle.

7. Appareil de jeu selon l'une quelconque des revendications précédentes, dans lequel une image affichée sur un écran (10) pendant le jeu est une image montrant une direction vers laquelle ledit joueur (40) pointe vu du dos dudit joueur (40), et
ledit premier moyen d'actionnement (11a à 11d) est un moyen que le joueur de la partie actionne à la main pour commander une direction de déplacement d'un joueur (40) et
ledit second moyen d'actionnement (1a à 12d) est un moyen que le joueur de la partie actionne au pied pour commander un mouvement par lequel un joueur (40) frappe une balle (50) et également une vitesse et une direction de la balle frappée (50) au pied.

8. Appareil de jeu selon la revendication 7, dans lequel une direction de balle prise lorsque le joueur de la partie actionne ledit second moyen d'actionnement (12a à 12d) au pied est une direction tridimensionnelle à l'intérieur du terrain.

9. Appareil de jeu selon la revendication 8, dans lequel ledit second moyen d'actionnement (12a à 12d) détecte une direction prise lorsque le joueur de la partie actionne le moyen d'actionnement au pied en utilisant un détecteur de vitesse (24, 124) et deux détecteurs de contrainte (130, 131) placés dans des directions perpendiculaires l'un par rapport à l'autre.
